(19) Europäisches Patentamt

European Patent Office

Office européen des brevets

(11) EP 1 029 098 B1

(12) **EUROPEAN PATENT SPECIFICATION**

(45) Date of publication and mention
of the grant of the patent:
**28.06.2006 Bulletin 2006/26**

(21) Application number: **98951096.1**

(22) Date of filing: **14.10.1998**

(51) Int Cl.:
*C22C 33/08* (2006.01)     *C22C 37/04* (2006.01)
*C22C 37/10* (2006.01)     *C22C 38/12* (2006.01)
*C22C 38/16* (2006.01)     *F16D 65/12* (2006.01)

(86) International application number:
**PCT/AU1998/000858**

(87) International publication number:
**WO 1999/019525 (22.04.1999 Gazette 1999/16)**

(54) **SPHEROIDAL GRAPHITE CAST IRON ALLOY CONTAINING MOLYBDENUM AND DISC BRAKE ROTOR THEREFROM**

KUGELGRAPHITGUSSEISENLEGIERUNG MIT MOLYBDÄN UND DARAUS HERGESTELLTER ROTOR FÜR SCHEIBENBREMSE

ALLIAGE DE FONTE A GRAPHITE SPEROIDAL CONTENANT DU MOLYBDENE ET ROTOR DE FREIN A DISQUE EN CE DERNIER

(84) Designated Contracting States:
**AT BE CH CY DE DK ES FI FR GB GR IE IT LI LU MC NL PT SE**

(30) Priority: **14.10.1997 AU PO978297**

(43) Date of publication of application:
**23.08.2000 Bulletin 2000/34**

(73) Proprietor: **Molycarbide International Ltd.
Port Louis (MU)**

(72) Inventor: **COOPER, Selwyn, James
Daylesford 3460, VICTORIA (AU)**

(74) Representative: **Hallybone, Huw George
Carpmaels and Ransford,
43 Bloomsbury Square
London WC1A 2RA (GB)**

(56) References cited:
EP-A- 0 076 701     EP-A- 0 144 907
AU-A- 1 805 683     AU-B- 142 702
DE-A- 3 509 709     DE-A1- 2 846 574
DE-C1- 19 636 808     US-A- 5 323 883

- **CHEMICAL ABSTRACTS, vol. 129, no. 22, 30 November 1998 (1998-11-30) Columbus, Ohio, US; abstract no. 292343, NIEDZWIEDZKI, ZENON ET AL: "Cast iron alloyed with silicon and nickel for nodular graphite structure" XP002185522 -& PL 173 194 B (POL.) 27 February 1998 (1998-02-27)**
- **CHEMICAL ABSTRACTS, vol. 129, no. 11, 14 September 1998 (1998-09-14) Columbus, Ohio, US; abstract no. 138995, NIEDZWIEDZKI, ZENON ET AL: "Nodular cast iron" XP002185523 -& PL 173 169 B (POL.) 27 February 1998 (1998-02-27)**
- **PATENT ABSTRACTS OF JAPAN, (C-629), page 97; & JP,A,01 132 719 (AKEBONO BRAKE RES & DEV CENTER LTD.) 25 May 1989.**

## Description

The present invention relates to iron alloys and processes for their production. Iron alloys in accordance with the invention are particularly suitable for use in disc brakes for vehicles and in other vehicular, especially automatic components.

Disc brakes were introduced into motor cars in the late 1950's. Disc brakes comprise a disc or rotor that is rigidly connected to the vehicle wheel hub. Two or more pads close by caliper action onto the disc or rotor in order to stop rotation of the disc or rotor and hence brake the vehicle. The pads have a friction lining which used to be composed of an asbestos material. The asbestos material served to substantially protect the pads from heat and mineral attack. However, in view of the extreme toxicity of asbestos, brake pads are now generally composed of a friction material which contains 10-20% volume resins, 0-10% volume friction modifiers, 0-10% volume metal powders, 20-40% volume fillers and 10-50% volume fibers (asbestos, metal, fibreglass and synthetic mineral fibres).

Since the introduction of disc brakes, gray cast iron has been the material of choice for manufacture of the discs or rotors. Compared with nodular cast iron, gray cast iron has greater thermal conductivity, a lower modulus of elasticity and is dimensionally stable above 500°C. Nodular cast irons have been considered to be unsuitable for use in disc brakes because they exhibit a too low thermal resistance.

Although gray cast iron has many properties that make it especially suitable for use in disc brakes, it does have the drawback of relatively low tensile strength. A number of authors have tried to address this drawback.

Jimbo et. al., in SAE Publication No. 900002, entitled "Development of High Thermal Conductivity Cast Iron for Brake Disc Rotors" discussed problems of cracking in disc brakes. The authors concluded that gray cast iron would be the most suitable rotor material in terms of crack resistance, due to its high thermal conductivity. The authors also concluded that the gray cast iron should have a high carbon level (to maximise thermal conductivity), a low silicon level and as low a level as possible of an alloying ingredient to increase strength. The authors decided to add molybdenum as the single alloying agent added to the gray cast iron. The authors tested a number of cast iron alloys having molybdenum contents in the range of 0.32-0.68% and concluded that the cast iron alloy should have a composition of 3.7-4.0% C, 1.4-2.0% Si and 0.5-0.6 Mo, balance iron and incidental impurities.

Australian Patent No. 426529 (19758/67) in the name of Westinghouse Air Brake Company related to a cast metal composition for disc brake rotors. This patent discusses difficulties encountered in fractures in the web of brake rotors when made from gray cast iron. One postulated solution was to use nodular or ductile cast iron which had sufficient strength to avoid this failure but the braking surface was subject to warping. This clearly caused that material to be unsuitable. The patent proposed a chromium-nickel cast iron having a composition of 3.20-3.55% carbon, 0.15-0.25% chromium, 1.15 to 1.35% nickel, 0.30 to 0.50% molybdenum, 0.50 to 0.80% manganese, 1.80 to 2.00% silicon, less than 0.10% phosphorus, less than 0.08% sulphur, balance iron. The alloy had a microstructure comprising uniform fine-grained pearlite in which a minimum of 75% type A plate graphite is evenly distributed.

Japanese Patent Application No. 60-52553 in the name of Sumitomo Kinzoku Kogyo K.K. discloses a steel for a disc brake rotor having 0.1-0.6% carbon, less than 0.8% silicon, less than 3% manganese, 0.2-5.0% nickel and optionally containing one or more of 0.5-5.0% aluminium, 0.1-3.0% copper, 0.2-3.0% titanium and 0.1-5.0% Mo. This steel is described as having a braking resistance equivalent to that of cast iron without spoiling the excellent resistance to thermal cracking of the forged steel rotor.

United States Patent No. 5,323,883 in the name of Mibe et. al. (assigned to Nissan Motor Company, Limited) relates to an automotive brake system. The brake system includes a rotor made of graphitic cast iron consisting of 3.5-4.0% carbon, 1.6-2.0% silicon, 0.5-0.8% manganese, 0.4-1.2% molybdenum, the remainder essentially iron. The matrix structure of the composition is in the form of a pearlite. This patent emphasises the importance of obtaining good thermal conductivity in materials used for disc brakes. The patent also states that if more than 1.2% Mo is added, carbides or casting defects can be created, thereby setting the upper level of molybdenum at 1.2%. Manganese is also an essential component of the metal alloy.

United States Patent No. 1,762,109 in the name of Taylor et. al. discloses a cast iron alloy which may be easily hardened and which may be more readily machined than ordinary cast iron. The cast iron alloy consists of 1.0-4.0% carbon, 0.5-2.5% silicon, 1.0-4.0% nickel and up to 1.0% molybdenum, balance iron and incidental impurities. The alloy is useful for manufacturing articles in which some portions have a hardened surface and other portions are relatively soft for machining and other purposes, such as tappets, cylinder blocks and pistons.

United States Patent No. 3,095,300 in the name of Moore et. al. discloses a cast iron composition that includes 1.2-5.3% manganese and 0.40-0.80% molybdenum and that provides a cast iron that is machineable as-cast and which can be hardened in air.

United States Patent No. 3,798,027 to Defranco et. al. discloses a high strength, low hardness gray cast iron that consists of 1-3% aluminium, 2-4% carbon, up to 1% silicon and the balance iron, the alloy also having been inoculated with an inoculant selected from calcium, strontium and barium. This patent suggests that in order to obtain certain particular properties, such as heat resistance or corrosion resistance, various quantities of alloying elements must be added, including, 0-6% copper, 0-12% nickel, 0-5% chromium, 0-2% molybdenum, and 0-1% zirconium.

United States Patent No. 3,902,897 to Sobue et. al., discloses a spheroidal graphite cast iron consisting of 2.3-4.2% C, 1.5-5.0% Si, not more than 1.0% Mn, 1.5-6.0% Ni, 0.1-1.0% Mo, 0.2-2.0% Al, up to 0.1% of a spheroidizing agent, balance Fe. The patent clearly discusses the importance of Al in the alloy and also states that a Mo content of 1.0 results in a large amount of carbide being formed in the as-cast state, which results in a too high hardness. The patent clearly states that the maximum amount of Mo is 1.0%.

United States Patent No. 4,166,756 to Geyes et. al. relates to the metallurgy of wear resistant damping elements used in railroad car trucks. In particular, this patent relates to the chemical composition and process control parameters, such as pouring temperature, dumping from the mould temperature and cooling rate in order to develop the desired microstructure in the castings. The alloy used has a chemical composition consisting of 3.00-3.30% carbon, 1.20-1.50% silicon, 0.85-1.00% manganese, 0.80-0.90% Molybdenum, 1.40-1.60% (nickel plus copper), balance iron. The process for forming castings from that chemistry is described as critical.

United States Patent No. 4,450,019 to Satou et. al. describes a ductile cast iron which exhibits high resistance to oxidation at high temperatures and thermal fatigue when used as a material for automobile exhaust manifolds. The cast iron consists of 2.5-3.8% carbon, 3.5-4.8% silicon, 1.0% or less manganese, 0.1 % or less phosphorus, 0.1% as less sulphur, 0.5-2.0% molybdenum, 0.03-0.1% magnesium, at least one of cerium and lanthanum in an amount of 0.02-0.5%, balance iron. If silicon is present in an amount of less than 3.5%, a protective layer of $SiO_2$ cannot form on the exhaust manifold and casting defects, such as shrinkage cavities, tend to result due to the degree of saturation of carbon. Cerium and lanthanum are essential elements of the composition. If Ce and La are present at less than the lower limit of 0.02%, silicon will not disperse towards the surface region of the casting (which is required to form the protective $SiO_2$ layer on the casting) and the property of Mo inhibiting the resistance to oxidation satisfactorily. Thus, Ce and La must be present in order to counteract the deleterious properties of the molybdenum present in the alloy.

In United States Patent No. 4,153,017 to Behnke, tappets for internal combustion engines were made from an iron alloy consisting of 3.10-3.60% carbon, 2.00-2.90% silicon, 0.60-0.90% manganese, 0.20-0.80% chromium, 0.30 to 0.60% nickel, 1.50 to 5.00% molybdenum, 0.10-0.50% vanadium, balance iron. Molybdenum was chosen as the main alloy element for several reasons, one of which was that molybdenum forms two types of carbide: a face-centred cubic $M_{23}C_6$ iron-molybdenum carbide and an orthorhombic $Fe_3C$ cementite carbide. The $M_{23}C_6$ type carbide is more stable. The chromium and vanadium are added to the alloy in order to dissolve the cementite type carbides, showing the criticality of adding Cr and V.

Attempts have also been made to manufacture automotive parts, such as brake rotors, from metal matrix composites (MMC's). For example, United States Patent No. 5,261,511 in the name of Libsch describes a brake rotor made from a composition having from 20-80 vol% silicon carbides and 80-20 vol% of an iron alloy. The patent states that the iron alloy consists essentially of 0.4-4.0% carbon (by weight), 1.8-18.0% silicon, 1.0-10.0% X, where X is selected from a group consisting of Cr, Mo, Cu, Mn, Ni, P and S, balance iron. Although this patent quotes a broad range of 1.0 to 10.0% for X, the only example shows that X is present in an amount of 1.51 % by weight and is made up of Cr (0.13), Mo (0.08), Cu (0.28), Mn(0.75), Ni (0.13), P (0.06) and S (0.08). The patent also states that the metal matrix composite, which incorporates 20-80% of silicon carbide particles and 80-20% of the iron alloy, is an effective material for manufacturing brake rotors. No mention at all is made of the suitability of the iron alloy by itself as a material for manufacture of the brake rotor and the patent specifically requires the presence of silicon carbide particles.

United States Patent No. 3,909,252 to Kuriyama et. al. describes a wear resistant and self lubricating cast iron. The cast iron consists of 1.0-3.5% carbon, 0.5-3.5% silicon, 0.1-1.5% manganese, 0.1-2.0% chromium, 1.0-15.0% cobalt, 0.5-10.0% molybdenum, 0.1-5.0% nickel, 0.05-2.0% niobium, 0.001-0.1% boron, balance iron. This cast iron, which contains a large amount of cobalt and additions of chromium and niobium, is especially suitable for manufacturing piston rings.

United States Patent No. 3,559,775 in the name of Miller describes a brake rotor made from a hypereutectic gray cast iron composition consisting of 3.6-4.0% carbon, 2.5-4.0% silicon and up to about 2% of one or more pearlite stabilising elements, and iron. The pearlite stabilising elements may be manganese, chromium, copper, tin and molybdenum. Although the patent states that the specified pearlite stabilising elements may be used alone or in combination, the only example that included molybdenum as a pearlite stabiliser utilised 0.10-0.20% molybdenum, and the molybdenum was used in combination with chromium. The chemically uncombined carbon was present in the form of relatively large discrete bodies of graphite of ASTM type A (i.e. flakes of graphite).

The Polish document PL 173 194 A discloses a cast iron to be used for the manufacture of piston rings, having nodular graphite morphology and containing : Si 3.8-4.8%, Ni 2.8-3.5%, Mo 1.70-2.20%, Cu 1.2-1.5%, Mg 0.04-0.12%, Ce 0.01-0.10%, C 2.7-3.2%, Mn <=0.5%, Cr <=0.06%, S <=0.02%, P <=0.03%, V <=0.02%, W<=0.02%, Ti <=0.01 %, Sn <=0.01 %, Al <=0.02%, Fe balance.

The Polish document PL 173 169 A discloses a spheroidal cast iron to be used for the manufacture of piston rings containing : Si 3.8-4.5%, Ni 1.2-1.5%, Mo 1.10-1.80%, Cu 0.9-1.2%, Mg 0.05-0.12%, Ce 0.05-0.12%, C 2.7-3.2%, S <=0.02%, P <=0.08%, Mn <=0.5%, Cr <=0.06%, V <=0.01 %, W <=0.02%, Ti <=0.01 %, Sn <=0.01%, Al <=0.02%, Fe balance.

It is an object of the present invention to provide an iron alloy that is particularly suitable for use in manufacturing disc brake rotors, and can also be used in manufacturing a wide variety of other automotive components and other articles.

According to a first aspect, the present invention provides a spheroidal graphite cast iron alloy as defined in claim 32.

Throughout the specification, all percentages will be expressed as percentage by weight.

The amount of carbon preferably falls within the range of from 1.5 to 3.8, more preferably 3.0 to 3.5%, more preferably from 3.0 to 3.35%, most preferably about 3.25%.

The amount of silicon in the iron alloy preferably falls within the range of form 1.9 to 2.5%, and more preferably from 2.1 to 2.3%.

Molybdenum is an essential component of the alloy and is present in an amount of at least 1.2%. Molybdenum is preferably present in an amount of at least 1.2% to 4.5%, more preferably at least 1.2% to 3.0%. It has been found that an alloy containing 1.5% molybdenum is suitable for use in the disc brake rotors of passenger cars whilst disc brake rotors for racing cars advantageously contain 3.0% molybdenum.

Nickel and/or copper may also be present and function as alloy modifiers to improve the strength and refine the structure of the alloy. Preferably nickel is present in an amount of 0.1 to 4.5%, more preferably 0.1 to 3.5% and most preferably 1%. The amount of copper is preferably 0.1 to 4.5%, more preferably 0.1 to 3.5% and most preferably 1%. The total amount of molybdenum and nickel and/or copper should not exceed 6.5%.

The incidental impurities may include manganese, sulphur and phosphorus. The amount of impurities is generally in the range of 0.1 to 0.8%, preferably 0.04% sulphur and 0.04% phosphorus.

A particularly preferred alloy of the present invention contains 3 to 3.35% carbon, 1.9 to 2.5% silicon and at least 1 to 3% molybdenum, the balance being iron and incidental impurities.

For disc brakes rotors for racing cars, a preferred composition of the alloy includes 3.5 to 4.5% carbon, 2.1 to 2.3% silicon, 2.5 to 3.5% molybdenum, balance iron and incidental impurities, more preferably 3.7-3.8% carbon, about 3.0% molybdenum, 2.1-2.3% silicon, balance iron and incidental impurities. Nickel and/or copper may optionally be included in the amounts specified above.

The carbon equivalent (CE) of this particularly preferred alloy is generally 3.8.

Carbon equilvalent is determined by the following formula:

$$\text{C.E.} = \%C + \frac{1}{3}\,(\%\,Si) \qquad\qquad (1)$$

Although nickel and/or copper may optionally be included in the alloy of the present invention in the amounts indicated above without substantial deleterious effects being observed, in one embodiment it is preferred that deliberate additions of nickel and copper to the alloy be minimised or avoided altogether. Therefore the iron alloy of the present invention nickel and/or copper present in impurity amounts only.

Similarly, the addition of further alloying components is preferably avoided. In particular, chromium, manganese, vanadium, and rare earth metals should be present in the iron alloy of the present invention at substantially zero levels, and certainly no higher than impurity levels. Chromium and manganese act to increase the hardness of the alloy, thereby making it difficult to machine. Further alloying elements would also undesirably increase the cost of making the alloy and could have unknown or undesirable effects on the microstructure and/or the physical properties of the alloy.

The present invention is a spheroidal graphite cast iron (also known as nodular cast iron), containing small amounts of one or more spheroidizing agents. Spheroidizing agents typically include some magnesium and accordingly the iron alloy may include small amounts of magnesium. Alternatively or additionally, the iron alloy may contain small amounts of elements used in other spheroidizing agents known to be suitable to the man skilled in the art. The spheroidizing agent is present in a maximum amount of 0.1% to 0.2%.

The most preferred iron alloy of the present invention comprises 3 to 3.35% carbon, 2.1-2.3% silicon, at least 1.0 to 3% molybdenum, balance iron and incidental impurities, in which the iron alloy is a spheroidal graphite cast iron.

Molybdenum is the main alloying element added to the iron alloy of the present invention. It has been found that molybdenum has a stabilising effect on the alloy in that it acts to suppress phase transitions in the alloy as temperature changes occur. When used in the manufacture of disc brake rotors, braking causes the rotors to heat up and cool down: The stabilising effect of the molybdenum minimises or avoid phase transitions which thereby assist in maintaining dimensional stability of the rotors and minimises or avoids cracking of the rotor. It is believed that molybdenum also increases the thermal conductivity of the alloy to thereby assist in improving heat dissipation from the rotors. Molybdenum also refines the grain to produce an alloy having a fine grain size.

The present inventor has conducted extensive searching of prior art literature and has not located any document that discloses an iron alloy having the composition specified herein. Another distinguishing feature of the present invention

EP 1 029 098 B1

lies in providing the specified composition in the form of a spheroidal graphite cast iron.

The iron alloy of the present invention is especially suitable for use in manufacturing disc brake rotors for vehicles, such as automobile, airplanes and trains.

According to another aspect, the present invention provides a disc brake rotor as defined in claim 26. When the iron alloy of the present invention is used in the manufacture of disc brake rotors, it has been found that the disc rotors exhibit reduced wear. Shudder, cracking and squealing; when compared with conventional disc brakes manufactured from gray cast iron, is also reduced.

Although the iron alloy of the present invention is especially suitable for manufacturing disc brake rotors, it will be appreciated that a wide variety of other articles may be made from the iron alloy of the present invention. Examples of other articles that may be made from the iron alloy of the present invention include vehicle, aircraft or ship parts including, keels, cylinder heads, cylinder blocks and wheels; ash and dust systems, pulverised fuel lines, wear plates for air control or burner boxes, particularly for use in power stations; pump bodies and covers; pipework; crusher parts; gear wheels and pinions; wear plates; dust feeding valves; water supply valves; couplings and other pipe connectors; cast flights; manhole covers and frames; grates; rollers; camshafts; crankshafts; knuckle joints on suspension systems; flywheels; and clutch plates; truck brake rotors; and brake drums for vehicles.

There is provided a process for the production of an iron alloy as described herein comprising the steps of:

> a) providing a melt including iron, silicon, carbon, molybdenum and optionally copper and/or nickel; and
> b) casting the melt.

Preferably, step (a) includes the step of melting cast iron, ferro silicon alloy, recarburiser and ferro molybdenum alloy. An inoculant may also be added to the melt. The melt is also preferably treated with a spheroidizing agent to cause any chemically uncombined carbon to be present in the cooled alloy in the form of spheres or nodules, rather than flakes.

The melting step (a) may be performed in any suitable apparatus such as a furnace, for example, an induction furnace. The ingredients melted are preferably well mixed so that the alloy elements are distributed throughout. The temperature of the furnace is preferably above about 1350°C. The melt in the furnace is then advantageously tapped into a preheated ladle. The iron alloy may be cast iron, spheroidal graphite (SG) iron or structural steel. Preferably the iron alloy is, for example, BHP-300PLUS which contains 0.22% C, 0.50% Si, 1.6% Mn 0.040% P, 0.040% S and a CE of 0.45. Other elements such as 0.40% Cu, 0.50% Ni, 0.30% Cr and 0.10% Mo may be present in the base iron alloy added to the melt, provided that their total content does not exceed 1.00%.

Preferably, the ferro silicon alloy contains 70 to 75% Si and 1.5 to 2% Al, the balance being iron and incidental impurities.

The recarburiser serves to increase the amount of carbon present in the alloy and may be a crushed electrode material, for example, Carbonin 101 which contains 98.0% carbon, 1.0% moisture, 0.5% volatile matter, 1.0% ash, 0.07% sulphur and 0.02% nitrogen.

Preferably the ferro molybdenum alloy contains 67% Mo, 1% Si, 0.6% S and 0.04% P, the balance being iron and incidental impurities.

After step (a), the melt may be optionally subjected to a metal treatment such as spheroidizing which converts flakes into spheres. This can be achieved by adding a magnesium ferro silicon alloy which suitably contains 6.3% Mg, 46.6% Si, 0.82% Al, 1.09% Ca and 0.99% Re, the balance being iron and incidental impurities. Other spheroidizing agents known to the person of skill in the art may also be used, including nickel magnesium ferro silicon spheroidizing agents.

The inoculant of step (b) refines the grains of the alloy and is preferably ZL80 which contains 71 % Si, 1.6% Al, 1.89% Zr and 0.83% Ca, the balance being iron and incidental impurities.

A nodularity modifier such as Spheroflux may then be added to the melt if desired.

The casting step preferably occurs before fade takes place otherwise the castings may be inferior. It is generally preferred that casting occur up to 10 minutes after addition of the innoculant, more preferably about 7 minutes. Castings are advantageously allowed to cool in the moulds, preferably overnight.

The invention will now be described with reference to the following examples and Figures. These examples and Figures are not to be construed as limiting the invention in any way. In the Figures;

> Figure 1 is a graph showing the results of an inertial dynamometer disc brake wear test for a disc rotor made from an iron alloy in accordance with the present invention;
> Figure 2 is a graph showing the results of an inertial dynamometer disc brake wear test for an original equipment (OE) disc rotor;
> Figures 3 and 4 show the results of low pressure wear tests using rotors made in accordance with the present invention and OE rotors;
> Figure 5 shows a photomicrograph of the cast edge of an etched test bar in accordance with the present invention

5

at magnification x100;
Figure 6 shows a photomicrograph at magnification x100 of a mid-radius section of the test bar in accordance with the present invention;
Figure 7 shows a photomicrograph of the general area of the test bar shown in Figure 6, but at magnification x500; and
Figure 8 is a photomicrograph similar to Figure 7 but at a magnification of x200.

## Example 1

The following ingredients were added to an induction furnace in the specified amounts:

| Ingredient | Amount (kg) |
| --- | --- |
| BHP-300 PLUS iron alloy | 400 |
| Ferro silicon alloy | 13.2 |
| Carbonin 101 recarburiser | 16.2 |
| Ferro molybdenum alloy | 8 |

The ingredients were melted in the furnace at 1400°C. The melt was then treated with 7 kg of a magnesium ferro silicon alloy which acts as a spheroidizing agent, 1.2 kg of an innoculant ZL80 and 0.8 kg of Spheroflux which is a nodularity modifier. The melt was stirred thoroughly so as to ensure adequate distribution of the alloy. Casting of the melt in a teapot ladle occurred within 7 minutes so as to ensure that there was no fade. The castings were then poured into moulds and allowed to cool overnight.

The resultant iron alloy had the following composition:

3.25% carbon;
2.1 % silicon;
1.5% molybdenum; and
93.15% iron and incidental impurities.

This alloy product was shown to reduce shudder and squeal in the disc brakes of normal passenger cars.

## Example 2

The same procedure as described in Example 1 was followed except that the following ingredients were added to the induction furnace in the specified amounts:

| Ingredient | Amount (kg) |
| --- | --- |
| BHP-300 PLUS iron alloy 400 | |
| Ferro silicon alloy | 13.2 |
| Carbonin 101 recarburiser | 16.2 |
| Ferro molybdenum alloy | 16 |

The resultant iron alloy had the following composition:

3.25% carbon;
2.1 % silicon;
3.0% molybdenum; and
91.65% iron and incidental impurities.

This alloy product was shown to reduce shudder and squeal in the disc brakes of racing cars.

## Example 3

In order to test the suitability of the iron alloy in accordance with the present invention for use in the manufacture of disc rotors for disc brakes, a set of disc rotors were manufactured using the iron alloy of Example 1. These disc rotors were then subjected to testing by a leading Australian brake company. The testing included:

- Low pressure wear test, which simulates rotor wear in a low pressure, off-load position;
- DTV dynamometer test, which equates to 20,000km of normal vehicle usage;
- full inertia dynamometer test, which simulate wear in normal driving conditions;
- damping test, which measures disc rotor noise; and
- cracking test, which involves bench testing at various simulated speeds at different standard rates.

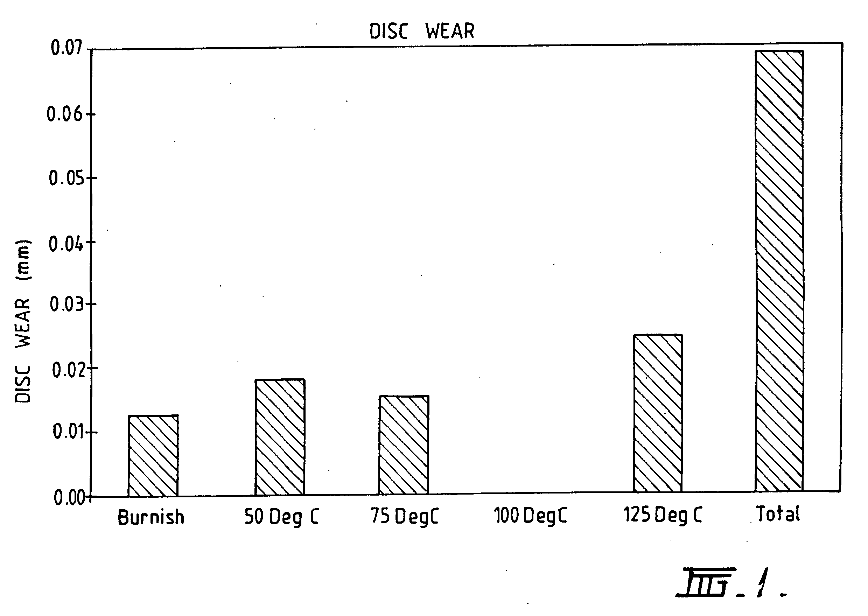

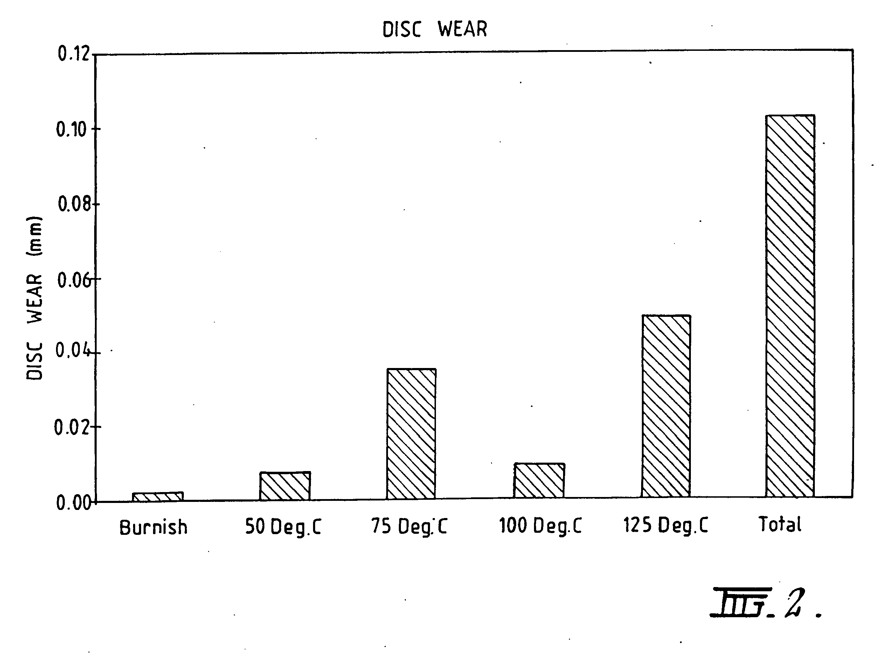

Tables 1 and 2 below give the raw data obtained from the inertia dynamometer disc brake wear test for rotors made from the iron alloy in accordance with the present invention (Table 1) and for original equipment (OE) disc rotors (Table 2). These results are shown graphically in Figures 1 and 2.

**TABLE 1**

| Position | Pre Burn | Post Burn | 50 Deg. C | 75 Deg. C | 100 Deg. C | 125 Deg. C |
|---|---|---|---|---|---|---|
| 1 | 23.958 | 23.945 | 23.929 | 23.914 | 23.912 | 23.893 |
| 2 | 23.96 | 23.95 | 23.93 | 23.915 | 23.911 | 23.889 |
| 3 | 23.959 | 23.947 | 23.931 | 23.913 | 23.911 | 23.891 |
| 4 | 23.961 | 23.949 | 23.932 | 23.914 | 23.914 | 23.891 |
| 5 | 23.959 | 23.947 | 23.931 | 23.914 | 23.914 | 23.871 |
| 6 | 23.958 | 23.948 | 23.931 | 23.913 | 23.911 | 23.889 |
| 7 | 23.96 | 23.948 | 23.929 | 23.913 | 23.913 | 23.889 |
| 8 | 23.959 | 23.946 | 23.923 | 23.912 | 23.914 | 23.889 |
| 9 | 23.958 | 23.945 | 23.921 | 23.912 | 23.914 | 23.89 |
| 10 | 23.957 | 23.944 | 23.922 | 23.912 | 23.916 | 23.891 |
| 11 | 23.958 | 23.943 | 23.924 | 23.912 | 23.916 | 23.892 |
| 12 | 23.956 | 23.943 | 23.927 | 23.912 | 23.916 | 23.892 |
| 13 | 23.957 | 23.944 | 23.929 | 23.912 | 23.917 | 23.888 |
| 14 | 23.958 | 23.945 | 23.93 | 23.914 | 23.917 | 23.885 |
| 15 | 23.96 | 23.946 | 23.932 | 23.914 | 23.917 | 23.885 |
| 16 | 23.961 | 23.946 | 23.93 | 23.914 | 23.912 | 23.89 |
| Avg Wear (um) | 0.005 | 0.013 | 0.018 | 0.015 | -0.001 | 0.025 |
| D.T.V. (um) | 0.005 | 0.007 | 0.011 | 0.003 | 0.006 | 0.008 |
| Weight | 6923.7 | 6921.6 | 6917.9 | 6915.2 | 6913.5 | 6908.6 |
| Weight Loss | | 2.1 | 3.7 | 2.7 | 1.7 | 4.9 |

**TABLE 2**

| Position | Pre Burn | Post Burn | 50 Deg. C | 75 Deg. C | 100 Deg. C | 125 Deg. C |
|---|---|---|---|---|---|---|
| 1 | 23.904 | 23.9 | 23.893 | 23.858 | 23.849 | 23.798 |
| 2 | 23.905 | 23.902 | 23.894 | 23.86 | 23.852 | 23.802 |
| 3 | 23.904 | 23.901 | 23.894 | 23.859 | 23.854 | 23.801 |
| 4 | 23.903 | 23.9 | 23.895 | 23.86 | 23.852 | 23.798 |
| 5 | 23.904 | 23.901 | 23.894 | 23.857 | 23.849 | 23.801 |
| 6 | 23.904 | 23.902 | 23.894 | 23.86 | .23.848 | 23.8 |
| 7 | 23.905 | 23.902 | 23.893 | 23.86 | 23.851 | 23.8 |
| 8 | 23.904 | 23.903 | 23.893 | 23.86 | 23.848 | 23.8 |
| 9 | 23.905 | 23.903 | 23.895 | 23.86 | 23.849 | 23.801 |
| 10 | 23.905 | 23.903 | 23.894 | 23.86 | 23.854 | 23.803 |
| 11 | 23.905 | 23.902 | 23.806 | 23.857 | 23.85 | 23.802 |
| 12 | 23.904 | 23.901 | 23.895 | 23.861 | 23.85 | 23.802 |
| 13 | 23.905 | 23.902 | 23.895 | 23.861 | 23.85 | 23.803 |
| 14 | 23.903 | 23.901 | 23.894 | 23.861 | 23.85 | 23.803 |
| 15 | 23.904 | 23.901 | 23.895 | 23.86 | 23.851 | 23.806 |

Table continued

| Position | Pre Burn | Post Burn | 50 Deg. C | 75 Deg. C | 100 Deg. C | 125 Deg. C |
|---|---|---|---|---|---|---|
| 16 | 23.904 | 23.902 | 23.895 | 23.862 | 23.855 | 23.806 |
| Avg Wear (um) | | 0.003 | 0.007 | 0.035 | 0.009 | 0.049 |
| D.T.V. (um) | 0.002 | 0.003 | 0.003 | 0.005 | 0.007 | 0.008 |
| Weight | 0 | 0 | 0 | 0 | 0 | 0 |
| Weight Loss | | 0 | 0 | 0 | 0 | 0 |

The total wear determined by this test for rotors made from the alloy of the present invention was 0.069mm, whereas the original equipment (OE) rotors showed total wear of 0.102 mm.

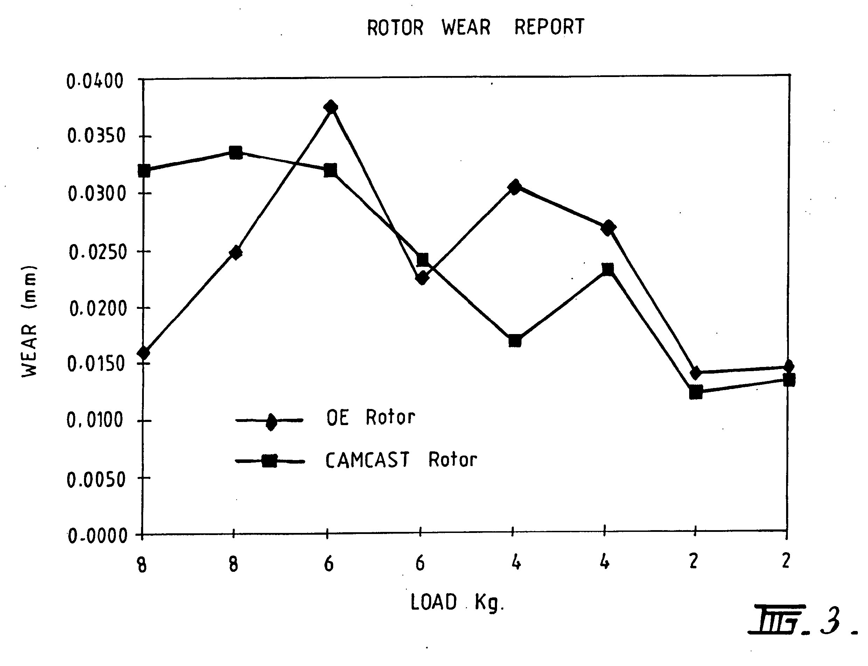

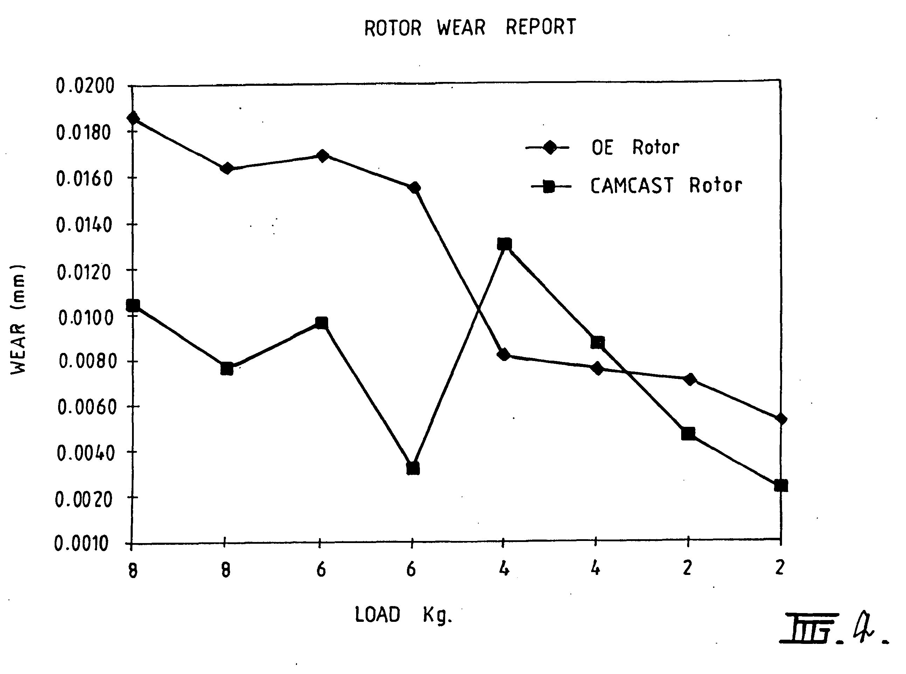

Figures 3 and 4 shows the results of the low pressure wear test using rotors made in accordance with the present invention (referred to in Figures 3 and 4 as "Camcast rotor") and OE rotors. Unfortunately, difficulties with the testing procedure, possibly in the data capture, resulted in Figures 3 and 4 showing some anamolous results, particularly with regard to wear appearing to decrease at increased loads. These tests are being run again but the results are not yet available. However, the data in Figures 3 and 4 that can be reliably interpreted shows that disc rotors in accordance with the present invention display superior wear properties to the OE rotors.

Shudder tests were also conducted. The brake company that conducted these tests used an internal ranking scale and rated disc rotors in accordance with the present invention at 8.5 out of 10. OE rotors normally rate at 5-6 out of 10. The shudder test also noted that there was no apparent shudder recorded.

## Example 4

A disc thickness variation (DTV) test was conducted on four disc rotors made from an alloy in accordance with the invention. The results of this test are tabulated in Table 3, which show only a very small variation in the thickness of the disc rotor.

**TABLE 3**

| DISC NO 1 | | | DISC NO 2 | | | DISC NO 3 | | | DISC NO 4 | | |
|---|---|---|---|---|---|---|---|---|---|---|---|
| 10mm from outer edge | | DTV | 10mm from outer edge | | DTV | 10mm from outer edge | | DTV | 10mm from outer edge | | DTV |
| outer | inner | V | outer | inner | V | outer | inner | V | outer | inner | V |
| 0 | 0 | 0 | 0 | -1 | -1 | 0 | 0 | 0 | 0 | 2 | 2 |
| 0 | -1 | -1 | 1 | -1 | 0 | 1 | -1 | 0 | 0 | 0 | 0 |
| 1 | -2 | -1 | 1 | 0 | 1 | 1 | 0 | 1 | 1 | 0 | 1 |
| 2 | -3 | -1 | 2 | -3 | -1 | 2 | 0 | 2 | 1 | -1 | 0 |
| 3 | -4 | -1 | 3 | -3 | 0 | 3 | -2 | 1 | 2 | -2 | 0 |
| 4 | -5 | -1 | | -4 | -1 | 4 | -3 | 1 | 3 | -2 | 1 |
| 5 | -6 | -1 | 4 | -3 | 1 | 5 | -4 | 1 | 4 | -2 | 2 |
| 6 | -6 | 0 | 4 | -5 | -1 | 6 | -4 | 2 | 4 | -3 | 1 |
| 7 | -6 | 1 | 5 | -5 | 0 | 7 | -5 | 2 | 5 | -3 | 2 |
| 9 | -7 | 2 | 5 | 6 | -1 | 8 | -6 | 2 | 5 | -2 | 3 |
| 9 | -8 | 1 | 5 | -6 | -1 | 8 | -6 | 2 | 4 | -2 | 2 |
| 11 | -10 | 1 | 6 | -6 | 0 | 9 | -6 | 3 | 4 | -2 | 2 |
| 12 | -11 | 1 | 6 | -8 | -2 | 9 | -7 | 2 | 4 | -2 | 2 |
| 13 | -11 | 2 | 7 | -9 | -2 | 9 | -8 | 1 | 4 | -2 | 2 |
| 13 | -11 | 2 | 9 | -10 | -1 | 9 | -7 | 2 | 4 | -2 | 2 |

Table continued

| DISC NO 1 | | DT | | DISC NO 2 | | DT | | DISC NO 3 | | DT | | DISC NO 4 | | DT |
|---|---|---|---|---|---|---|---|---|---|---|---|---|---|---|
| 10mm from outer edge | | | | 10mm from outer edge | | | | 10mm from outer edge | | | | 10mm from outer edge | | |
| 13 | -11 | 2 | | 10 | -9 | 1 | | 9 | -6 | 3 | | 3 | -2 | 1 |
| 14 | -11 | 3 | | 11 | -12 | -1 | | 8 | -6 | 2 | | 3 | -1 | 2 |
| 14 | -12 | 2 | | 12 | -13 | -1 | | 7 | -5 | 2 | | 3 | 0 | 3 |
| 15 | -12 | 3 | | 13 | -13 | 0 | | 6 | -5 | 1 | | 2 | 0 | 2 |
| 15 | -13 | 2 | | 14 | -13 | 1 | | 5 | -4 | 1 | | 3 | 1 | 4 |
| 15 | -14 | 1 | | 14 | -14 | 0 | | 5 | -3 | 2 | | 3 | 0 | 3 |
| 16 | -14 | 2 | | 15 | -15 | 0 | | 4 | -3 | 1 | | 3 | 0 | 3 |
| 15 | -14 | 1 | | 15 | -14 | 1 | | 4 | -3 | 1 | | 4 | -1 | 3 |
| 15 | -13 | 2 | | 14 | -13 | 1 | | 4 | -3 | 1 | | 3 | -1 | 2 |
| 15 | -12 | 3 | | 14 | -14 | 0 | | 4 | -3 | 1 | | 3 | 0 | 3 |
| 14 | -12 | 2 | | 14 | -14 | 0 | | 3 | -2 | 1 | | 3 | 0 | 3 |
| 13 | -11 | 2 | | 13 | -13 | 0 | | 2 | -2 | 0 | | 2 | 0 | 2 |
| 12 | -10 | 2 | | 13 | -13 | 0 | | 2 | -1 | 1 | | 2 | 0 | 2 |
| 11 | -9 | 2 | | 12 | -13 | -1 | | 2 | 0 | 2 | | 2 | 0 | 2 |
| 10 | -8 | 2 | | 12 | -12 | 0 | | 2 | -1 | 1 | | 2 | 0 | 2 |
| 8 | -7 | 1 | | 11 | -12 | -1 | | 2 | -1 | 1 | | 2 | -1 | 1 |
| 6 | -5 | 1 | | 10 | -11 | -1 | | 2 | -2 | 0 | | 2 | -1 | -1 |
| 4 | -3 | 1 | | 8 | -9 | -1 | | 2 | -2 | 0 | | 2 | 0 | 2 |
| 3 | -2 | 1 | | 7 | -8 | -1 | | 2 | -1 | 1 | | 2 | 0 | 2 |
| 2 | -1 | 1 | | 6 | -7 | -1 | | 1 | -2 | -1 | | 2 | 0 | 2 |
| 2 | -1 | 1 | | 4 | -5 | -1 | | 2 | -2 | 0 | | 2 | 0 | 2 |
| 0 | 0 | 0 | | 4 | -5 | -11 | | 2 | -2 | 0 | | 1 | 0 | 1 |
| 0 | 0 | 0 | | 32 | -3 | 0 | | 1 | -2 | -11 | | 1 | 0 | 1 |
| 0 | 1 | 1 | | 2 | -2 | 0 | | 1 | -1 | 0 | | 1 | 0 | 1 |
| 0 | 0 | 0 | | 1 | -2 | -1 | | 0 | -1 | -1 | | 1 | 0 | 1 |
| 0 | 0 | 0 | | 1 | -2 | -1 | | 0 | -1 | -1 | | 1 | 0 | 1 |
| 0 | 0 | 0 | | 0 | 0 | 0 | | 0 | -1 | -1 | | 0 | 0 | 0 |
| 0 | 0 | 0 | | 0 | 0 | 0 | | 0 | 0 | 0 | | 0 | 0 | 0 |
| Runout outer | runout inner | dtv | | Runout outer | runout inner | dtv | | Runout outer | runout inner | dtv | | Runout outer | runout inner | dtv |
| 16 | 15 | 4 | | 15 | 15 | 3 | | 9 | 8 | 4 | | 5 | 5 | 4 |

The testing conducted to date on disc rotors in accordance with the invention is only at an early stage and further testing is required before conclusive results can be obtained. However, the early testing conducted to date indicate that disc rotors in accordance with the invention have superior performance to OE disc rotors. Indeed, it is believed that disc rotors in accordance with the present invention will provide the following benefits, when compared with OE disc rotors:

- Eliminates shudder;
- Will not crack;
- Lower disc thickness variation values;
- Lower co-efficient of drag;
- Safer product;
- Longer life;
- Minimises rust;
- Lower deposits of black residue on alloy wheels;
- More stable material;
- Easy to manufacture.

Preliminary micrographic metallurgical analysis of a test sample having a composition in accordance with the present invention have been conducted. The test sample was in the form of a test bar of 30mm diameter and having the following composition:

| | |
|---|---|
| Carbon | 3.7% |
| Silicon | 2.58% |
| Manganese | 0.259% |
| Phosphorous | 0.037% |
| Sulphur | 0.010% |
| Chrome | 0.034% |
| Nickel | 0.070% |
| Molybdenum | 1.28% |
| Magnesium | 0.039% |
| Iron | Balance |

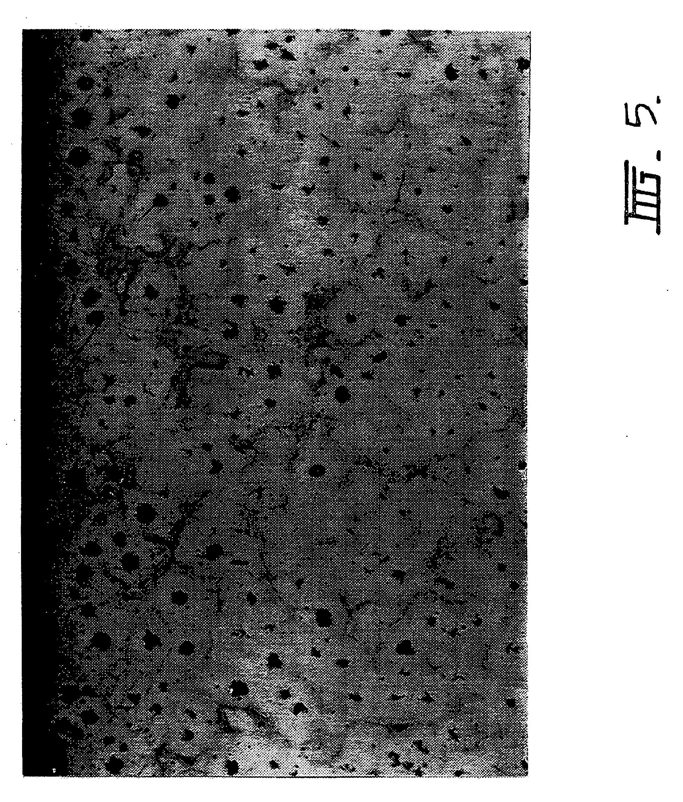

Figure 5 shows a photomicrograph taken at magnification x100 of the cast edge of the test bar. The test bar was etched in 2% nital solution.

Figure 5 shows a typical nodular cast iron structure showing well defined spheroidal graphite (particularly in the surface to sub-surface regions) in a matrix that consists of ferrite and pearlite and a complex carbide formed during initial solidification. It is postulated that as the melt cools from liquid, graphite forms nodules which then act as nuclei around which ferrite grows. As the ferrite grows, the remaining liquid (rich in carbon and alloying ingredients, especially molybdenum) goes into the interstitial space. This liquid contains the complex carbide and it forms an austenite phase having the complex carbide associated therewith. The austenite is then transformed into pearlite as the casting further cools. The complex carbides are thought to be formed from the liquid and hence they are fairly uniformly distributed.

As the field of view moves back into the bulk of the casting (away from the edge), the spheroidal morphology of the graphite tends to degrade (from form VI back to forms V and IV).

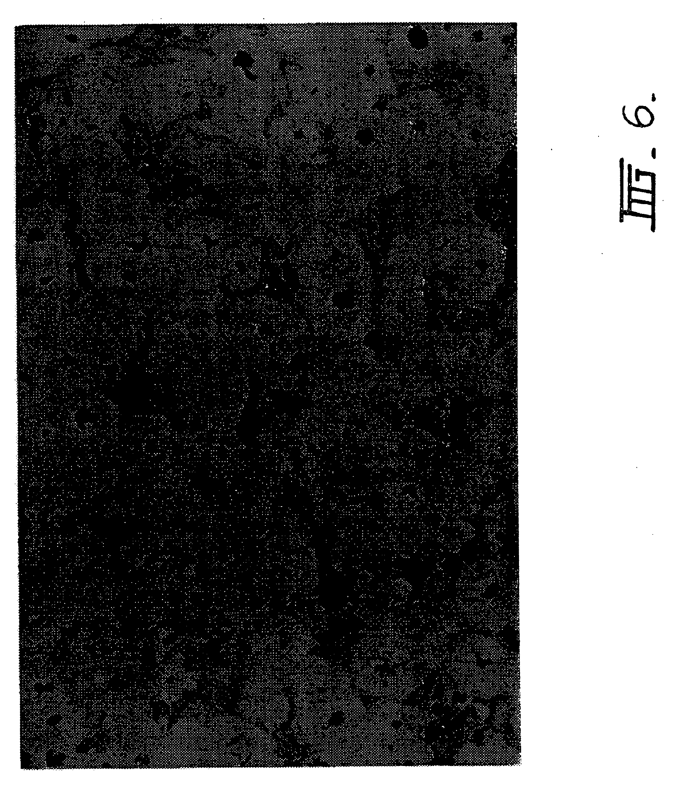

Figure 6 shows a photomicrograph at magnification x100 of the test bar etched in 2% nital solution. This shows a microstructure showing the presence of the spheroidal graphite (predominantly in "degraded" or less spherical morphologies) together with the ferrite, pearlite and complex carbide constituents. The pearlite is present and approximately 20% (by area fraction) of the microstructure.

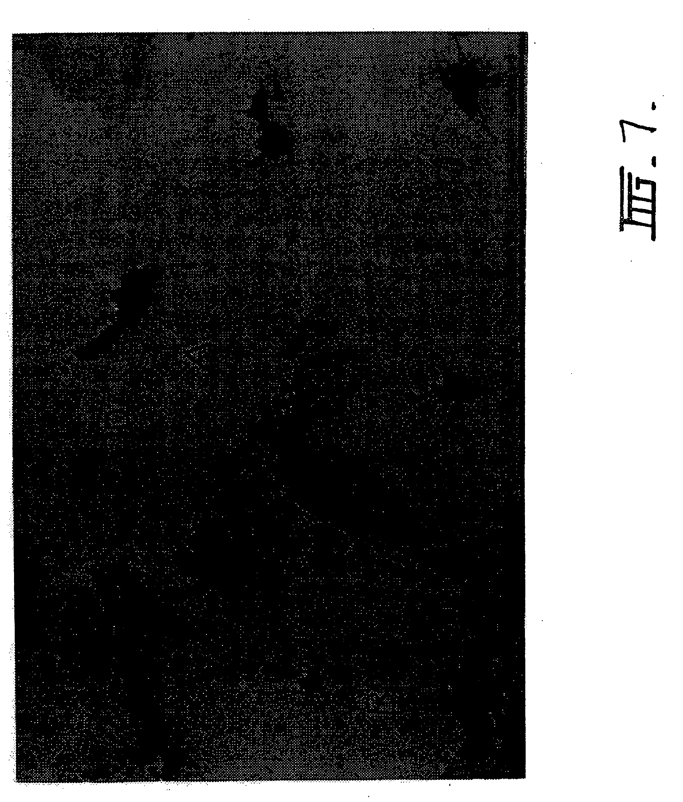

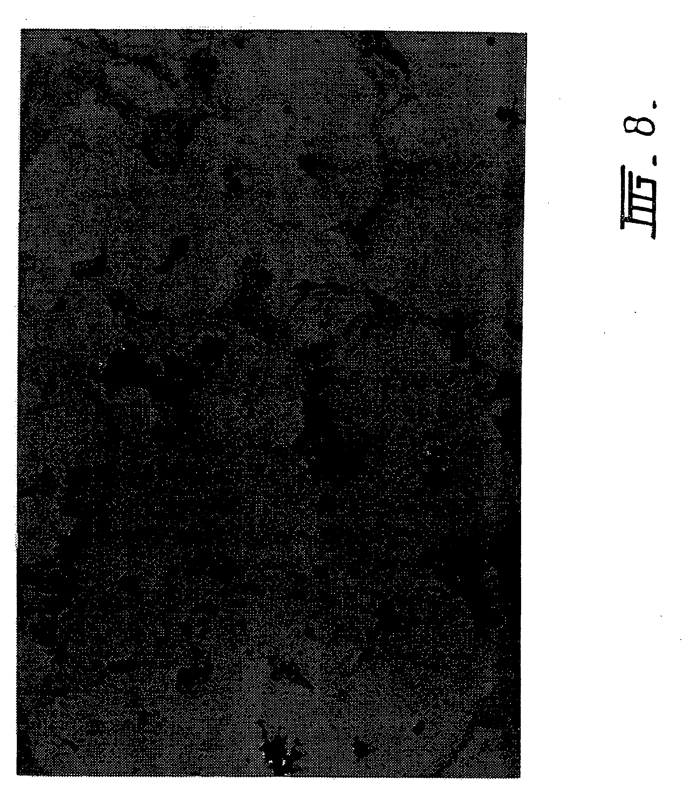

Figure 7 shows a photomicrograph at magnification x500, etched in 2% nital solution, of the same general region of the test bar as shown in Figure 6. Figure 8 is similar to Figure 7, but magnification was x200. Details of the microstructure have been labelled in Figure 7. Microhardness testing of the phases was also conducted using 100g Hv (vickers hardness) and are also reported below:

A - degraded graphite nodule (form IV)
B - ferrite surrounding the graphite nodules, microhardness using Hv 100gm is typically 200
C - pearlite occupying the previously interdendritic regions, microhardness is typically 400
D - complex carbide, believed to be of the type $M_6C$, where M would be variable combinations of Fe, Mo and other carbide-forming elements. The complex carbide is present as a skeleton-like compound in the previously interdendritic regions and representing approximately 5% (by area fraction) of the microstructure. Microhardness measurements of the "skeletons" (including the carbide plus pearlite) is typically 550 plus.

Prior to cutting and polishing the sections of the test bars, macrohardness measurements using Hv20kg averaged 214 (mid radius) and 204 (rear edge).

**EP 1 029 098 B1**

The test bar showed degraded spheroidal graphite towards the centre of the bar. However, the test bar was still clearly classified as a spheroidal graphite cast iron. The degradation near the centre was possibly caused by slower cooling in that region due to the relatively large diameter (30mm) of the test bar. It is expected that articles of thinner section, such as disc brake rotors that are typically of thickness 10-12mm, would not suffer from spheroidal graphite degradation or that the degradation would be minimised.

The presence of the complex carbide phase in the alloy of the present invention was unexpected and the testing officer commented that he had never before seen such a phase in a cast iron. The alloy had a microstructure comprising very soft nodules of graphite surrounded by relatively soft and ductile ferrite. These soft parts are strengthened and hardened by the pearlite phase and the very hard complex carbide phase. Interestingly, the preliminary micrographic analysis conducted to date did not locate any bainite. Importantly, the microstructure discussed above can be obtained from the as-cast condition.

Those skilled in the art will appreciate that the invention described herein is susceptible to variations and modifications other than those specifically described. It will be understood that the present invention encompasses all such variations and modifications that fall within the scope.

## Claims

1. Use of an as cast spheroidal graphite cast iron alloy containing, by weight 1.5 to 4.5% carbon; 1.5 to 4.5% silicon; 1.2 to 6.5% molybdenum; optionally nickel and/or copper and wherein the (% molybdenum + % nickel + % copper) does not exceed 6.5%; a spheroidizing agent, the spheroidizing agent being present in the iron alloy in up to 0.2%; chromium, manganese, vanadium and rare earth metals being present in the iron alloy at no higher than impurity levels; balance iron and incidental impurities, in the production of a disk brake rotor.

2. Use as claimed in claim 1 wherein carbon is present in the iron alloy in an amount of from 1.5 to 3.8%.

3. Use as claimed in claims 1 or 2 wherein carbon is present in the iron alloy in an amount of 3.0 to 3.5%.

4. Use as claimed in any one of the previous claims wherein carbon is present in the iron alloy in an amount of from 3.0 to 3.35%.

5. Use as claimed in any one of the previous claims wherein silicon is present in the iron alloy in an amount of from 1.9 to 2.58%.

6. Use as claimed in any one of the previous claims wherein silicon is present in the iron alloy in an amount of from 2.1 to 2.3%.

7. Use as claimed in any one of the previous claims wherein molybdenum is present in the iron alloy in an amount of from 1.2 to 4.5%.

8. Use as claimed in any one of the previous claims wherein molybdenum is present in the iron alloy in an amount of from 1.2 to 3.0%.

9. Use as claimed in any one of the previous claims wherein nickel is present in the iron alloy in an amount of from 0.1 to 4.5%.

10. Use as claimed in any one of the previous claims wherein nickel is present in the iron alloy in an amount of from 0.1 to 3.5%.

11. Use as claimed in any one of the previous claims wherein nickel is present in the iron alloy in an amount of 1.0%.

12. Use as claimed in any one of the previous claims wherein copper is present in the iron alloy in an amount of from 0.1 to 4.5%.

13. Use as claimed in any one of the previous claims wherein copper is present in the iron alloy in an amount of from 0.1 to 3.5%.

14. Use as claimed in any one of the previous claims wherein copper is present in the iron alloy in an amount of 1.0%.

15. Use as claimed in any one of claims 1 to 8 wherein the nickel in the iron alloy is either absent or present only in incidental impurity amounts.

16. Use as claimed in any one of claims 1 to 8 wherein copper in the iron alloy is either absent or present only in incidental impurity amounts.

17. Use as claimed in claim 1 wherein the spheroidal graphite cast iron alloy contains 3 to 3.5% carbon; 1.9 to 2.58% silicon; 1.2 to 1.5% molybdenum; a spheroidizing agent, the spheroidizing agent being present in the iron alloy in up to 0.2%; balance iron and incidental impurities.

18. Use as claimed in claim 1 wherein the spheroidal graphite cast iron alloy contains 3 to 3.35% carbon; 1.9 to 2.58% silicon; 3.0% molybdenum; a spheroidizing agent, the spheroidizing agent being present in the iron alloy in up to 0.2%; balance iron and incidental impurities.

19. Use as claimed in claim 1 wherein the spheroidal graphite cast iron alloy contains from 3.5 to 4.5% carbon; from 2.1 to 2.3% silicon; from 2.5 to 3.5% molybdenum; a spheroidizing agent, the spheroidizing agent being present in the iron alloy in up to 0.2%; balance iron and incidental impurities.

20. Use as claimed in claim 19 wherein molybdenum is present in the iron alloy in an amount of 3.0% and carbon is present in an amount of 3.7%.

21. Use as claimed in any one of the previous claims wherein the weight percentage of the incidental impurities in the iron alloy does not exceed 0.8%.

22. Use as claimed in claim 21 wherein the incidental impurities in the iron alloy include up to 0.04% sulphur and up to 0.04% phosphorus.

23. Use according to claim 1 wherein the spheroidal graphite cast iron alloy contains from 1.5% to 4.5% carbon; from 1.5 to 4.5% silicon; from 1.2 to 4.5% molybdenum; a spheroidizing agent, the spheroidizing agent being present in the iron alloy in up to 0.2%; balance iron, and wherein other elements are present only in impurity amounts.

24. Use as claimed in claim 1 wherein the iron alloy contains nickel in an amount less than 0.1%.

25. Use as claimed in claim 1 wherein the iron alloy contains copper in an amount less than 0.1%.

26. A disk brake rotor comprising a spheroidal graphite cast iron alloy containing, by weight 1.5 to 4.5% carbon; 1.5 to 4.5% silicon; 1.2 to 6.5% molybdenum; optionally nickel and/or copper and wherein the (% molybdenum + % nickel + % copper) does not exceed 6.5%; a spheroidizing agent, the spheroidizing agent being present in the iron alloy in up to 0.2%; chromium, manganese, vanadium and rare earth metals being present in the iron alloy at no higher than impurity levels, balance iron and incidental impurities.

27. A disk brake rotor as claimed in claim 26, wherein molybdenum is present in the iron alloy in an amount of from 1.2 to 4.5%.

28. A disk brake rotor as claimed in claim 26, wherein molybdenum is present in the iron alloy in an amount of from 1.2 to 3.0%.

29. A disk brake rotor as claimed in claim 26 wherein the spheroidal graphite cast iron alloy contains 3 to 3.5% carbon; 1.9 to 2.58% silicon; 1.2 to 1.5% molybdenum; a spheroidizing agent present in up to 0.2%; balance iron and incidental impurities.

30. A disk brake rotor as claimed in claim 26 wherein the spheroidal graphite cast iron alloy contains 3 to 3.35% carbon; 1.9 to 2.58% silicon; 3.0% molybdenum; a spheroidizing agent present in up to 0.2%; balance iron and incidental impurities.

31. A disk brake rotor as claimed in claim 26 wherein the spheroidal graphite cast iron alloy contains from 3.5 to 4.5% carbon; from 2.1 to 2.3% silicon; from 2.5 to 3.5% molybdenum; a spheroidizing agent present in up to 0.2%; balance iron and incidental impurities.

32. A spheroidal graphite cast iron alloy containing, by weight 1.5 to 4.5% carbon; 1.5 to 4.5% silicon; 1.2 to 6.5% molybdenum; optionally nickel and/or copper and wherein the (% molybdenum + % nickel + % copper) does not exceed 6.5% and wherein the nickel and/or copper is either absent or present only in incidental impurity amounts; a spheroidizing agent, the spheroidizing agent being present in the iron alloy in up to 0.2%; chromium, manganese, vanadium and rare earth metals being present in the iron alloy at no higher than impurity levels; balance iron and incidental impurities..

33. A spheroidal graphite cast iron alloy as claimed in claim 32 wherein carbon is present in the iron alloy in an amount of from 1.5 to 3.8%.

34. A spheroidal graphite cast iron alloy as claimed in claims 32 or 33 wherein carbon is present in the iron alloy in an amount of 3.0 to 3.5%.

35. A spheroidal graphite cast iron alloy as claimed in any one of the previous claims wherein carbon is present in the iron alloy in an amount of from 3.0 to 3.35%.

36. A spheroidal graphite cast iron alloy as claimed in any one of the previous claims wherein silicon is present in the iron alloy in an amount of from 1.9 to 2.58%.

37. A spheroidal graphite cast iron alloy as claimed in any one of the previous claims wherein silicon is present in the iron alloy in an amount of from 2.1 to 2.3%.

38. A spheroidal graphite cast iron alloy as claimed in any one of the previous claims wherein molybdenum is present in the iron alloy in an amount of from 1.2 to 4.5%.

39. A spheroidal graphite cast iron alloy as claimed in any one of the previous claims wherein molybdenum is present in the iron alloy in an amount of from 1.2 to 3.0%.

40. A spheroidal graphite cast iron alloy as claimed in claim 32 wherein the spheroidal graphite cast iron alloy contains 3 to 3.5% carbon; 1.9 to 2.58% silicon; 1.2 to 1.5% molybdenum; a spheroidizing agent, the spheroidizing agent being present in the iron alloy in up to 0.2%; balance iron and incidental impurities.

41. A spheroidal graphite cast iron alloy as claimed in claim 32 wherein the spheroidal graphite cast iron alloy contains 3 to 3.35% carbon; 1.9 to 2.58% silicon; 3.0% molybdenum; a spheroidizing agent, the spheroidizing agent being present in the iron alloy in up to 0.2%; balance iron and incidental impurities.

42. A spheroidal graphite cast iron alloy as claimed in claim 32 wherein the spheroidal graphite cast iron alloy contains from 3.5 to 4.5% carbon; from 2.1 to 2.3% silicon; from 2.5 to 3.5% molybdenum; a spheroidizing agent, the spheroidizing agent being present in the iron alloy in up to 0.2%; balance iron and incidental impurities.

43. A spheroidal graphite cast iron alloy as claimed in claim 42 wherein molybdenum is present in the iron alloy in an amount of 3.0% and carbon is present in an amount of 3.7%.

44. A spheroidal graphite cast iron alloy as claimed in any one of the previous claims wherein the weight percentage of the incidental impurities in the iron alloy does not exceed 0.8%.

45. A spheroidal graphite cast iron alloy as claimed in claim 44 wherein the incidental impurities in the iron alloy include up to 0.04% sulphur and up to 0.04% phosphorus.

46. A spheroidal graphite cast iron alloy according to claim 32 wherein the spheroidal graphite cast iron alloy contains from 1.5% to 4.5% carbon; from 1.5 to 4.5% silicon; from 1.2 to 4.5% molybdenum; a spheroidizing agent, the spheroidizing agent being present in the iron alloy in up to 0.2%; balance iron, and wherein other elements are present only in impurity amounts.

47. A spheroidal graphite cast iron alloy as claimed in claim 32 wherein the iron alloy contains nickel in an amount less than 0.1%.

48. A spheroidal graphite cast iron alloy as claimed in claim 32 wherein the iron alloy contains copper in an amount less than 0.1%.

**Patentansprüche**

1. Verwendung einer Kugelgraphitgusseisenlegierung im Gusszustand, enthaltend in Gewichtsteilen 1,5 bis 4,5% Kohlenstoff; 1,5 bis 4,5% Silizium; 1,2 bis 6,5% Molybdän; wahlweise Nickel und/oder Kupfer und wobei (% Molybdän + % Nickel + % Kupfer) 6,5% nicht übersteigt; ein spheroisierendes Mittel, wobei das spheroisierende Mittel in der Eisenlegierung in bis zu 0,2% vorliegt; Chrom, Mangan, Vanadium und Seltenerdmetalle in der Eisenlegierung in nicht mehr als Verunreinigungsniveaus vorliegen; als Rest Eisen und beiläufige Verunreinigungen, für die Herstellung eines Scheibenbremsenrotors.

2. Verwendung nach Anspruch 1, wobei Kohlenstoff in der Eisenlegierung in einer Menge von 1,5 bis 3,8% vorliegt.

3. Verwendung nach Anspruch 1 oder 2, wobei Kohlenstoff in der Eisenlegierung in einer Menge von 3,0 bis 3,5% vorliegt.

4. Verwendung gemäß einem der vorhergehenden Ansprüche, wobei Kohlenstoff in der Eisenlegierung in einer Menge von 3,0% bis 3,35% vorliegt.

5. Verwendung gemäß einem der vorhergehenden Ansprüche, wobei Silizium in der Eisenlegierung in einer Menge von 1,9 bis 2,58% vorliegt.

6. Verwendung gemäß einem der vorhergehenden Ansprüche, wobei Silizium in der Eisenlegierung in einer Menge von 2,1 bis 2,3% vorliegt.

7. Verwendung gemäß einem der vorhergehenden Ansprüche, wobei Molybdän in der Eisenlegierung in einer Menge von 1,2 bis 4,5% vorliegt.

8. Verwendung gemäß einem der vorhergehenden Ansprüche, wobei Molybdän in der Eisenlegierung in einem Menge von 1,2 bis 3,0% vorliegt.

9. Verwendung gemäß einem der vorhergehenden Ansprüche, wobei Nickel in der Eisenlegierung in einer Menge von 0,1 bis 4,5% vorliegt.

10. Verwendung gemäß einem der vorhergehenden Ansprüche, wobei Nickel in der Eisenlegierung in einer Menge von 0,1 bis 3,5% vorliegt.

11. Verwendung gemäß einem der vorhergehenden Ansprüche, wobei Nickel in der Eisenlegierung in einer Menge von 1,0% vorliegt.

12. Verwendung gemäß einem der vorhergehenden Ansprüche, wobei Kupfer in der Eisenlegierung in einer Menge von 0,1 bis 4,5% vorliegt.

13. Verwendung gemäß einem der vorhergehenden Ansprüche, wobei Kupfer in der Eisenlegierung in einer Menge von 0,1 bis 3,5% vorliegt.

14. Verwendung gemäß einem der vorhergehenden Ansprüche, wobei Kupfer in der Eisenlegierung in einer Menge von 1,0% vorliegt.

15. Verwendung gemäß einem der Ansprüche 1 bis 8, wobei Nickel in der Eisenlegierung entweder fehlt oder lediglich in beiläufigen Verunreinigungsmengen vorliegt.

16. Verwendung gemäß einem der Ansprüche 1 bis 8, wobei Kupfer in der Eisenlegierung entweder fehlt oder lediglich in beiläufigen Verunreinigungsmengen vorliegt.

17. Verwendung gemäß Anspruch 1, wobei die Kugelgraphitgusseisenlegierung 3 bis 3,5% Kohlenstoff; 1,9 bis 2,58% Silizium; 1,2 bis 1,5% Molybdän; ein spheroisierendes Mittel, wobei das spheroisierende Mittel in der Eisenlegierung in bis zu 0,2% vorliegt; als Rest Eisen und beiläufige Verunreinigungen enthält.

18. Verwendung gemäß Anspruch 1, wobei die Kugelgraphitgusseisenlegierung 3 bis 3,35% Kohlenstoff; 1,9 bis 2,58% Silizium; 3,0 % Molybdän; ein spheroisierendes Mittel, wobei das spheroisierende Mittel in der Eisenlegierung in bis zu 0,2% vorliegt; als Rest Eisen und beiläufige Verunreinigungen enthält.

19. Verwendung gemäß Anspruch 1, wobei die Kugelgraphitgusseisenlegierung von 3,5% bis 4,5% Kohlenstoff; von 2,1% bis 2,3% Silizium; von 2,5% bis 3,5% Molybdän; ein spheroisierendes Mittel, wobei das spheroisierende Mittel in der Eisenlegierung in bis zu 0,2% vorliegt; als Rest Eisen und beiläufige Verunreinigungen enthält.

20. Verwendung gemäß Anspruch 19, wobei Molybdän in der Eisenlegierung in einer Menge von 3,0% und Kohlenstoff in einer Menge von 3,7% vorliegen.

21. Verwendung gemäß einem der vorhergehenden Ansprüche, wobei der Gewichtsteil der beiläufigen Verunreinigungen in der Eisenlegierung 0,8% nicht übersteigt.

22. Verwendung gemäß Anspruch 21, wobei die beiläufugen Verunreinigungen in der Eisenlegierung bis zu 0,04% Schwefel und bis zu 0,04% Phosphor einschließen.

23. Verwendung gemäß Anspruch 1, wobei die Kugelgraphitgusseisenlegierung von 1,5% bis 4,5% Kohlenstoff; von 1,5% bis 4,5% Silizium; von 1,2% bis 4,5% Molybdän; ein spheroisierendes Mittel, wobei das spheroisierende Mittel in der Eisenlegierung in bis zu 0,2% vorliegt; als Rest Eisen, und wobei andere Elemente lediglich in Verunreinigungsmengen vorliegen, enthält.

24. Verwendung gemäß Anspruch 1, wobei die Eisenlegierung Nickel in einer Menge von weniger als 0, 1 % enthält.

25. Verwendung gemäß Anspruch 1, wobei die Eisenlegierung Kupfer in einer Menge von weniger als 0,1% enthält.

26. Scheibenbremsenrotor umfassend eine Kugelgraphitgusseisenlegierung enthaltend in Gewichtsteilen 1,5% bis 4,5% Kohlenstoff; 1,2% bis 4,5% Silizium; 1,5% bis 6,5% Molybdän; wahlweise Nickel und/oder Kupfer und wobei (% Molybdän + % Nickel + % Kupfer) 6,5% nicht übersteigt; ein spheroisierendes Mittel, wobei das spheroisierende Mittel in der Eisenlegierung in bis zu 0,2% vorliegt; Chrom, Mangan, Vanadium und Seltenerdmetalle in der Eisenlegierung in nicht mehr als als Verunreinigungsniveau vorliegen, als Rest Eisen und beiläufige Verunreinigungen.

27. Scheibenbremsenrotor gemäß Anspruch 26, wobei Molybdän in der Eisenlegierung in einer Menge von 1,2% bis 4,5% vorliegt.

28. Scheibenbremsenrotor gemäß Anspruch 26, wobei Molybdän in der Eisenlegierung in einer Menge von 1,2% bis 3,0% vorliegt.

29. Scheibenbremsenrotor gemäß Anspruch 26, wobei die Kugelgraphitgusseisenlegierung 3% bis 3,5% Kohlenstoff; 1,9% bis 2,58% Silizium; 1,2% bis 1,5% Molybdän; ein spheroisierendes Mittel, das in bis zu 0,2% vorliegt; als Rest Eisen und beiläufige Verunreinigungen, enthält.

30. Scheibenbremsenrotor gemäß Anspruch 26, wobei die Kugelgraphitgusseisenlegierung 3% bis 3,35% Kohlenstoff; 1,9% bis 2,58% Silizium; 3,0% Molybdän; ein spheroisierendes Mittel, das in bis zu 0,2% vorliegt; als Rest Eisen und beiläufige Verunreinigungen, enthält.

31. Scheibenbremsenrotor gemäß Anspruch 26, wobei die Kugelgraphitgusseisenlegierung von 3,5% bis 4,5% Kohlenstoff; von 2,1% bis 2,3% Silizium; von 2,5% bis 3,5% Molybdän; ein spheroisierendes Mittel, das in bis zu 0,2% vorliegt; als Rest Eisen und beiläufige Verunreinigungen, enthält.

32. Kugelgraphitgusseisenlegierung enthaltend in Gewichtsteilen 1,5% bis 4,5% Kohlenstoff; 1,5% bis 4,5% Silizium; 1,2% bis 6,5% Molybdän; wahlweise Nickel und/oder Kupfer und wobei (% Molybdän + % Nickel + % Kupfer) 6,5% nicht übersteigt und wobei Nickel und/oder Kupfer entweder fehlen oder lediglich in beiläufig Verunreinigungsmengen vorliegen; ein spheroisierendes Mittel, wobei das spheroisierende Mittel in der Eisenlegierung in bis zu 0,2% vorliegt; Chrom, Mangan, Vanadium und Seltenerdmetalle in der Eisenlegierung nicht mehr als zu Verunreinigungsniveaus vorliegen; als Rest Eisen und beiläufige Verunreinigungen.

**33.** Kugelgraphitgusseisenlegierung gemäß Anspruch 32, wobei Kohlenstoff in der Eisenlegierung in einer Menge von 1,5% bis 3,8% vorliegt.

**34.** Kugelgraphitgusseisenlegierung gemäß Anspruch 32 oder 33, wobei Kohlenstoff in der Eisenlegierung in einer Menge von 3,0% bis 3,5% vorliegt.

**35.** Kugelgraphitgusseisenlegierung gemäß einem der vorhergehenden Ansprüche, wobei Kohlenstoff in der Eisenlegierung in einer Menge von 3,0% bis 3,35% vorliegt.

**36.** Kugelgraphitgusseisenlegierung gemäß einem der vorhergehenden Ansprüche, wobei Silizium in der Eisenlegierung in einer Menge von 1,9% bis 2,58% vorliegt.

**37.** Kugelgraphitgusseisenlegierung gemäß einem der vorhergehenden Ansprüche, wobei Silizium in der Eisenlegierung in einer Menge von 2, 1 % bis 2,3% vorliegt.

**38.** Kugelgraphitgusseisenlegierung gemäß einem der vorhergehenden Ansprüche, wobei Molybdän in der Eisenlegierung in einer Menge von 1,2% bis 4,5% vorliegt.

**39.** Kugelgraphitgusseisenlegierung gemäß einem der vorhergehenden Ansprüche, wobei Molybdän in der Eisenlegierung in einer Menge von 1,2% bis 3,0% vorliegt.

**40.** Kugelgraphitgusseisenlegierung gemäß Anspruch 32, wobei die Kugelgraphitgusseisenlegierung 3,0% bis 3,5% Kohlenstoff; 1,9% bis 2,58% Silizium; 1,2% bis 1,5% Molybdän; ein spheroisierendes Mittel, wobei das spheroisierende Mittel in der Eisenlegierung in bis zu 0,2% vorliegt; als Rest Eisen und beiläufige Verunreinigungen, enthält.

**41.** Kugelgraphitgusseisenlegierung gemäß Anspruch 32, wobei die Kugelgraphitgusseisenlegierung 3% bis 3,35% Kohlenstoff; 1,9% bis 2,58% Silizium; 3,0% Molybdän; ein spheroisierendes Mittel, wobei das spheroisierende Mittel in der Eisenlegierung in bis zu 0,2% vorliegt; als Rest Eisen und beiläufigen Verunreinigungen, enthält.

**42.** Kugelgraphitgusseisenlegierung gemäß Anspruch 32, wobei die Kugelgraphitgusseisenlegierung von 3,5 % bis 4,5% Kohlenstoff; von 2,1% bis 2,3% Silizium; von 2,5% bis 3,5% Molybdän; ein spheroisierendes Mittel, wobei das spheroisierende Mittel in der Eisenlegierung in bis zu 0,2% vorliegt; als Rest Eisen und beiläufige Verunreinigungen, enthält.

**43.** Kugelgraphitgusseisenlegierung gemäß Anspruch 42, wobei Molybdän in der Eisenlegierung in einer Menge von 3,0% und Kohlenstoff in einer Menge von 3,7% vorliegen.

**44.** Kugelgraphitgusseisenlegierung gemäß einem der vorhergehenden Ansprüche, wobei der Gewichtsanteil der beiläufigen Verunreinigungen in der Eisenlegierung 0,8% nicht übersteigt.

**45.** Kugelgraphitgusseisenlegierung gemäß Anspruch 44, wobei die beiläufigen Verunreinigungen in der Eisenlegierung bis zu 0,04% Schwefel und bis zu 0,04% Phosphor einschließen.

**46.** Kugelgraphitgusseisenlegierung gemäß Anspruch 32, wobei die Kugelgraphitgusseisenlegierung von 1,5% bis 4,5% Kohlenstoff; von 1,5% bis 4,5% Silizium; von 1,2% bis 4,5% Molybdän; ein spheroisierendes Mittel, wobei das spheroisierende Mittel in der Eisenlegierung in bis zu 0,2% vorliegt; als Rest Eisen, und wobei andere Elemente lediglich in Verunreinigungsmengen vorliegen, enthält.

**47.** Kugelgraphitgusseisenlegierung gemäß Anspruch 32, wobei die Eisenlegierung Nickel in einer Menge von weniger als 0, 1 % enthält.

**48.** Kugelgraphitgusseisenlegierung gemäß Anspruch 32, wobei die Eisenlegierung Kupfer in einer Menge von weniger als 0, 1 % enthält.

**Revendications**

**1.** Utilisation d'un alliage de fonte à graphite sphéroïdal contenant, en poids, de 1,5 à 4,5 % de carbone ; de 1,5 à 4,5 % de silicium ; de 1,2 à 6,5 % de molybdène ; éventuellement du nickel et/ou du cuivre et dans lequel la somme (% de molybdène + % de nickel + % de cuivre) ne dépasse pas 6,5 % ; un agent de sphéroïdisation, l'agent de sphéroïdisation étant présent dans l'alliage de fonte jusqu'à 0,2 %; du chrome, du manganèse, du vanadium et des métaux de terre rares étant présents dans l'alliage de fonte à des niveaux non supérieurs aux niveaux d'impureté ; le reste étant du fer et des impuretés accidentelles, dans la production d'un rotor de frein à disque.

2. Utilisation selon la revendication 1, dans laquelle le carbone est présent dans l'alliage de fonte dans une quantité comprise entre 1,5 et 3,8 %.

3. Utilisation selon la revendication 1 ou 2, dans laquelle le carbone est présent dans l'alliage de fonte dans une quantité comprise entre 3,0 et 3,5 %.

4. Utilisation selon l'une quelconque des revendications précédentes, dans laquelle le carbone est présent dans l'alliage de fonte dans une quantité comprise entre 3,0 et 3,35 %.

5. Utilisation selon l'une quelconque des revendications précédentes, dans laquelle du silicium est présent dans l'alliage de fonte dans une quantité comprise entre 1,9 et 2,58 %.

6. Utilisation selon l'une quelconque des revendications précédentes, dans laquelle du silicium est présent dans l'alliage de fonte dans une quantité comprise entre 2,1 et 2,3 %.

7. Utilisation selon l'une quelconque des revendications précédentes, dans laquelle du molybdène est présent dans l'alliage de fonte dans une quantité comprise entre 1,2 et 4,5 %.

8. Utilisation selon l'une quelconque des revendications précédentes, dans laquelle du molybdène est présent dans l'alliage de fonte dans une quantité comprise entre 1,2 et 3,0 %.

9. Utilisation selon l'une quelconque des revendications précédentes, dans laquelle du nickel est présent dans l'alliage de fonte dans une quantité comprise entre 0,1 et 4,5 %.

10. Utilisation selon l'une quelconque des revendications précédentes, dans laquelle du nickel est présent dans l'alliage de fonte dans une quantité comprise entre 0,1 et 3,5 %.

11. Utilisation selon l'une quelconque des revendications précédentes, dans laquelle du nickel est présent dans l'alliage de fonte dans une quantité de 1,0 %.

12. Utilisation selon l'une quelconque des revendications précédentes, dans laquelle du cuivre est présent dans l'alliage de fonte dans une quantité comprise entre 0,1 et 4,5 %.

13. Utilisation selon l'une quelconque des revendications précédentes, dans laquelle du cuivre est présent dans l'alliage de fonte dans une quantité comprise entre 0,1 et 3,5 %.

14. Utilisation selon l'une quelconque des revendications précédentes, dans laquelle du cuivre est présent dans l'alliage de fonte dans une quantité de 1,0 %.

15. Utilisation selon l'une quelconque des revendications 1 à 8, dans laquelle le nickel dans l'alliage de fonte est soit absent soit présent uniquement dans des quantités d'impuretés accidentelles.

16. Utilisation selon l'une quelconque des revendications 1 à 8, dans laquelle du cuivre dans l'alliage de fonte est soit absent soit présent uniquement dans des quantités d'impuretés accidentelles.

17. Utilisation selon la revendication 1, dans laquelle l'alliage de fonte à graphite sphéroïdal contient de 3 à 3,5 % de carbone ; de 1,9 à 2,58 % de silicium ; de 1,2 à 1,5 % de molybdène ; un agent de sphéroïdisation, l'agent de sphéroïdisation étant présent dans l'alliage de fonte dans une quantité allant jusqu'à 0,2 % ; le reste étant du fer et des impuretés accidentelles.

18. Utilisation selon la revendication 1, dans laquelle l'alliage de fonte à graphite sphéroïdal contient de 3 à 3,35 % de carbone ; de 1,9 à 2,58 % de silicium ; 3,0 % de molybdène ; un agent de sphéroïdisation, l'agent de sphéroïdisation étant présent dans l'alliage de fonte dans une quantité allant jusqu'à 0,2 % ; le reste étant du fer et des impuretés accidentelles.

19. Utilisation selon la revendication 1, dans laquelle l'alliage de fonte à graphite sphéroïdal contient de 3,5 à 4,5 % de carbone ; de 2,1 à 2,3 % de silicium ; de 2,5 à 3,5 % de molybdène ; un agent de sphéroïdisation, l'agent de sphéroïdisation étant présent dans l'alliage de fonte dans une quantité allant jusqu'à 0,2 % ; le reste étant du fer et des impuretés accidentelles.

20. Utilisation selon la revendication 19, dans laquelle du molybdène est présent dans l'alliage de fonte dans une quantité de 3,0 % et du carbone est présent dans une quantité de 3,7 %.

21. Utilisation selon l'une quelconque des revendications précédentes, dans laquelle le pourcentage en poids des impuretés accidentelles dans l'alliage de fonte ne dépasse pas 0,8 %.

22. Utilisation selon la revendication 21, dans laquelle les impuretés accidentelles dans l'alliage de fonte comprennent jusqu'à 0,04 % de soufre et jusqu'à 0,04 % de phosphore.

23. Utilisation selon la revendication 1, dans laquelle l'alliage de fonte à graphite sphéroïdal contient de 1,5 % à 4,5 % de carbone ; de 1,5 % à 4,5 % de silicium ; de 1,2 à 4,5 % de molybdène ; un agent de sphéroïdisation, l'agent de sphéroïdisation étant présent dans l'alliage de fonte dans une quantité allant jusqu'à 0,2 % ; le reste étant du fer, et dans laquelle d'autres éléments sont présents uniquement dans des quantité d'impuretés.

24. Utilisation selon la revendication 1, dans laquelle l'alliage de fonte contient du nickel dans une quantité inférieure à 0,1 %.

25. Utilisation selon la revendication 1, dans laquelle l'alliage de fonte contient du cuivre dans une quantité inférieure à 0,1 %.

26. Rotor de frein à disque comprenant un alliage de fonte à graphite sphéroïdal contenant, en poids, de 1,5 à 4,5 % de carbone ; de 1,5 à 4,5 % de silicium ; de 1,2 à 6,5 % de molybdène ; éventuellement du nickel et/ou du cuivre et dans lequel la somme (% de molybdène + % de nickel + % de cuivre) ne dépasse pas 6,5 % ; un agent de sphéroïdisation, l'agent de sphéroïdisation étant présent dans l'alliage de fonte dans une quantité allant jusqu'à 0,2 % ; du chrome, du manganèse, du vanadium et des métaux de terre rares étant présents dans l'alliage de fonte à un niveau non supérieur aux niveaux d'impuretés, le reste étant du fer et des impuretés accidentelles.

27. Rotor de frein à disque selon la revendication 26, dans lequel du molybdène est présent dans l'alliage de fonte dans une quantité comprise entre 1,2 et 4,5 % en poids.

28. Rotor de frein à disque selon la revendication 26, dans lequel du molybdène est présent dans l'alliage de fonte dans une quantité comprise entre 1,2 et 3,0 %.

29. Rotor de frein à disque selon la revendication 26, dans lequel l'alliage de fonte à graphite sphéroïdal contient de 3 à 3,5 % de carbone ; de 1,9 à 2,58 % de silicium ; de 1,2 à 1,5 % de molybdène ; un agent de sphéroïdisation étant présent dans une quantité allant jusqu'à 0,2 % ; le reste étant du fer et des impuretés accidentelles.

30. Rotor de frein à disque selon la revendication 26, dans lequel l'alliage de fonte à graphite sphéroïdal contient de 3 à 3,35 % de carbone ; de 1,9 à 2,58 % de silicium ; 3,0 % de molybdène ; un agent de sphéroïdisation étant présent dans une quantité allant jusqu'à 0,2 % ; le reste étant du fer et des impuretés accidentelles.

31. Rotor de frein à disque selon la revendication 26, dans lequel l'alliage de fonte à graphite sphéroïdal contient de 3,5 à 4,5 % de carbone ; de 2,1 à 2,3 % de silicium ; de 2,5 à 3,5 % de molybdène ; un agent de sphéroïdisation étant présent dans une quantité allant jusqu'à 0,2 % ; le reste étant du fer et des impuretés accidentelles.

32. Alliage de fonte à graphite sphéroïdal contenant, en poids, de 1,5 à 4,5 % de carbone ; de 1,5 à 4,5 % de silicium ; de 1,2 à 6,5 % de molybdène ; éventuellement du nickel et/ou du cuivre et dans lequel la somme (% de molybdène + % de nickel + % de cuivre) ne dépasse pas 6,5 % et dans lequel le nickel et/ou le cuivre est soit absent soit présent uniquement dans des quantités d'impuretés accidentelles ; un agent de sphéroïdisation, l'agent de sphéroïdisation étant présent dans l'alliage de fonte dans une quantité allant jusqu'à 0,2 % ; du chrome, du manganèse, du vanadium et des métaux de terre rares étant présents dans l'alliage de fonte à un niveau non supérieur aux niveaux d'impuretés ; le reste étant du fer et des impuretés accidentelles.

33. Alliage de fonte à graphite sphéroïdal selon la revendication 32 ; dans lequel du carbone est présent dans l'alliage de fonte dans une quantité comprise entre 1,5 et 3,8 %.

34. Alliage de fonte à graphite sphéroïdal selon la revendication 32 ou 33, dans lequel du carbone est présent dans l'alliage de fonte dans une quantité de 3,0 à 3,5 %.

35. Alliage de fonte à graphite sphéroïdal selon l'une quelconque des revendications précédentes, dans lequel du carbone est présent dans l'alliage de fonte dans une quantité comprise entre 3,0 et 3,35 %.

36. Alliage de fonte à graphite sphéroïdal selon l'une quelconque des revendications précédentes, dans lequel du silicium est présent dans l'alliage de fonte dans une quantité comprise entre 1,9 et 2,58 %.

37. Alliage de fonte à graphite sphéroïdal selon l'une quelconque des revendications précédentes, dans lequel du silicium est présent dans l'alliage de fonte dans une quantité comprise entre 2,1 et 2,3 %.

38. Alliage de fonte à graphite sphéroïdal selon l'une quelconque des revendications précédentes, dans lequel du molybdène est présent dans l'alliage de fonte dans une quantité comprise entre 1,2 et 4,5 %.

39. Alliage de fonte à graphite sphéroïdal selon l'une quelconque des revendications précédentes, dans lequel du molybdène est présent dans l'alliage de fonte dans une quantité comprise entre 1,2 et 3,0 %.

40. Alliage de fonte à graphite sphéroïdal selon la revendication 32, dans lequel l'alliage de fonte à graphite sphéroïdal contient de 3 à 3,5 % de carbone ; de 1,9 à 2,58 % de silicium ; de 1,2 à 1,5 % de molybdène ; un agent de sphéroïdisation, l'agent de sphéroïdisation étant présent dans l'alliage de fonte dans une quantité allant jusqu'à 0,2 % ; le reste étant du fer et des impuretés accidentelles.

41. Alliage de fonte à graphite sphéroïdal selon la revendication 32, dans lequel l'alliage de fonte à graphite sphéroïdal contient de 3 à 3,35 % de carbone de 1,9 à 2,58 % de silicium ; 3,0 % de molybdène ; un agent de sphéroïdisation, l'agent de sphéroïdisation étant présent dans l'alliage de fonte dans une quantité allant jusqu'à 0,2 % ; le reste étant du fer et des impuretés accidentelles.

42. Alliage de fonte à graphite sphéroïdal selon la revendication 32, dans lequel l'alliage de fonte à graphite sphéroïdal contient de 3,5 à 4,5 % de carbone ; de 2,1 à 2,3 % de silicium ; de 2,5 à 3,5 % de molybdène ; un agent de sphéroïdisation, l'agent de sphéroïdisation étant présent dans l'alliage de fonte dans une quantité allant jusqu'à 0,2 % ; le reste étant du fer et des impuretés accidentelles.

43. Alliage de fonte à graphite sphéroïdal selon la revendication 42, dans lequel du molybdène est présent dans l'alliage de fonte dans une quantité de 3,0 % et du carbone est présent dans une quantité de 3,7 %.

44. Alliage de fonte à graphite sphéroïdal selon l'une quelconque des revendications précédentes, dans lequel le pourcentage en poids des impuretés accidentelles dans l'alliage de fonte ne dépasse pas 0,8 %.

45. Alliage de fonte à graphite sphéroïdal selon la revendication 44, dans lequel des impuretés accidentelles dans l'alliage de fonte comprennent jusqu'à 0,04 % de soufre et jusqu'à 0,04 % de phosphore.

46. Alliage de fonte à graphite sphéroïdal selon la revendication 32, dans lequel l'alliage de fonte à graphite sphéroïdal contient de 1,5 % à 4,5 % de carbone ; de 1,5 à 4,5 % de silicium ; de 1,2 à 4,5 % de molybdène ; un agent de sphéroïdisation, l'agent de sphéroïdisation étant présent dans l'alliage de fonte dans une quantité allant jusqu'à 0,2 % ; le reste étant du fer, et dans lequel d'autres éléments sont présents uniquement dans les quantités d'impuretés.

47. Alliage de fonte à graphite sphéroïdal selon la revendication 32, dans lequel l'alliage de fonte contient du nickel dans une quantité inférieure à 0,1 %.

48. Alliage de fonte à graphite sphéroïdal selon la revendication 32, dans lequel l'alliage de fonte contient du cuivre dans une quantité inférieure à 0,1 %.

DISC WEAR

_FIG. 1._

EP 1 029 098 B1

DISC WEAR

FIG. 2.

EP 1 029 098 B1

ROTOR WEAR REPORT

Legend:
- OE Rotor
- CAMCAST Rotor

WEAR (mm) vs LOAD Kg.

EP 1 029 098 B1

_FIG. 3._

# ROTOR WEAR REPORT

FIG. 4.

EP 1 029 098 B1

FIG. 5.

FIG. 6.

FIG. 7.

FIG. 8.